# EUROPEAN PATENT APPLICATION

(11) **EP 2 518 583 A2**
(43) Date of publication of application: **31.10.2012**
(21) Application number: 12002756.0
(22) Date of filing: 19.04.2012
(51) Int. Cl.: G06F 1/16, G06F 1/18

(54) **Integration device for network computing and security and network storage**

(30) Priority: 28.04.2011 TW 10207517
(71) Applicant: Caswell Inc., 23845 New Taipei City (TW)
(72) Inventor: Huang, Shih-Hua, 23146 New Taipei City (Sindian Dist.) (TW)
(74) Representative: Zeitler - Volpert - Kandlbinder

(57) **Abstract**

An integration device for network computing and security and network storage is provided with a computer unit (10). The computer unit (10) at least includes a network computing and security module (20) for the computation processing of application and security program; a network access control module (30) working for data access and control; and a mainboard I/O module (40) serving as a single-board common module, providing a means of connection of 10G transmission speed, including a means of RJ-45 or optic-fiber connection. Thus, the network computing and security module (20) and the network access control module (30) may be integrated in a computer unit (10) for effectively saving the space of a cabinet and combining with the 10G high transmission speed, providing the integration device having the functionality of the powerful module assembly for actively increasing the economic benefit of manufacturing and the ability of product competition.

## Description

### BACKGROUND OF THE INVENTION

### Field of the Invention

This invention relates to an integration device used for network computing and security and network storage and particularly to that applied to an industrial computer cabinet for effectively saving the space of cabinet working with flexibly optional I/O interface module of high transmission speed, which features high expandability and economic benefit.

### Description of the Related Art

In the conventional way, a hard disk drive (H.D.D.) is used as a main storage medium for data storage. File sharing and data access that are implemented must depends on a file server. The data storage is called Direct Attached Storage (DAS). The disadvantage of this approach is the fact that resource sharing is achieved through a commonly used operating system (OS). The operating system is generally designed for multi-use planning but not designed only for optimalization of the I/O aspect of a file. Thus, the efficiency of network system drops dramatically.

Further, experts made many kinds of solutions to the file I/O bottleneck problem caused by the inefficiency of the whole network system. To grasp the crux of the problem, the data storage is separated from the general application server to simplify the storage management, which proves the most effective way. Therefore, network storage is provided. A storage module is separated from the application server for centralized management. NAS is made to serve as a high-performance storage module only for file I/O, all of the unnecessary service programs and tool software are removed, and the access function of file I/O is maximized to make the file access much more efficient than the conventional file server. However, an extra space is required for the NAS, accordingly.

Further, along with the growth and development of the multimedia, a lot of texts, images, videos, audios and the like as data must be processed and transferred. However, products of 10G transmission speed available in the market are applied for data computing and security, and the NAS network storage system transmits in a speed less than 10G. Thus, the time and cost consumed for transferring a large number of data is also very impressive.

Further, the conventional I/O system is connected necessarily depending on all different customers' variable requests, which makes a mainboard to be repeatedly designed and thus the design cost increase; in such a way, fast adjustment cannot be made upon customers' demands and the needs of clients for economic benefits cannot be matched, which is not an ideal design; thus, it is apparent that improvement is necessarily made. Thus, what the manufacturers make great effort to earnestly improve is the disadvantage of the conventional network computing and network storage.

Thus, owing to the disadvantage of conventional network computing and security and network storage and the fact that the structure is not ideal, this inventor designs and develops for a solution and expects to develop for saving the space of cabinet and combining a 10G high-speed transmission modular design, serving the community and promoting the development of this industry.

Consequently, because of the technical defects of described above, the applicant keeps on carving unflaggingly through wholehearted experience and research to develop the present invention, which can effectively improve the defects described above.

### SUMMARY OF THE INVENTION

This invention is mainly to provide a device integrated with a network computing and security module, a network access control module, and a mainboard I/O module. Further, the data storage structure of the network access control module is a Network Attached Storage (NAS) structure.

This invention is further to provide a 2.5" HDD extractable module for a 2U limited space in which a highest-capacity hard disk is placed for saving the space of a cabinet.

This invention is next to provide a high-speed mainboard I/O common module for customers to do flexibly optional 10G connection, for example, by means of RJ-45 or fiber-optic connection.

In order to achieve the objects mentioned above, the device according to this invention comprises: a computer unit, which includes a network computing and security module for the computation processing of application and security program; a network access control module working for data access and control, in which the data storage structure is a Network Attached Storage (NAS) structure; and a mainboard I/O module serving as single-board common module, providing a means of connection 10G transmission speed, including a means of RJ-45 or optic-fiber connection.

In order to let you further know the features and technical means of this invention, refer to the following detailed description according to this invention accompanied with drawings; however, the accompanied drawings are provided for reference and illustration only and are not limited to this invention.

### BRIEF DESCRIPTION OF THE DRAWINGS

Fig. 1 is a schematic view of this invention;
Fig. 2 is a partial schematic view of this invention;
Fig. 3 is a schematic view illustrating a single-board I/O common module according to this invention;
Fig. 4 is a schematic view illustrating a data storage device according to this invention;
Fig. 5 is a schematic view of the other embodiment of this invention; and
Fig. 6 is a schematic logic view of this invention.

### DETAILED DESCRIPTION OF THE PREFERRED EMBODIMENTS

Now, the present invention will be described more specifically with reference to the following embodiments. It is to be noted that the following descriptions of preferred embodiments of this invention are presented herein for purpose of illustration and description only; it is not intended to be exhaustive or to be limited to the precise form disclosed.

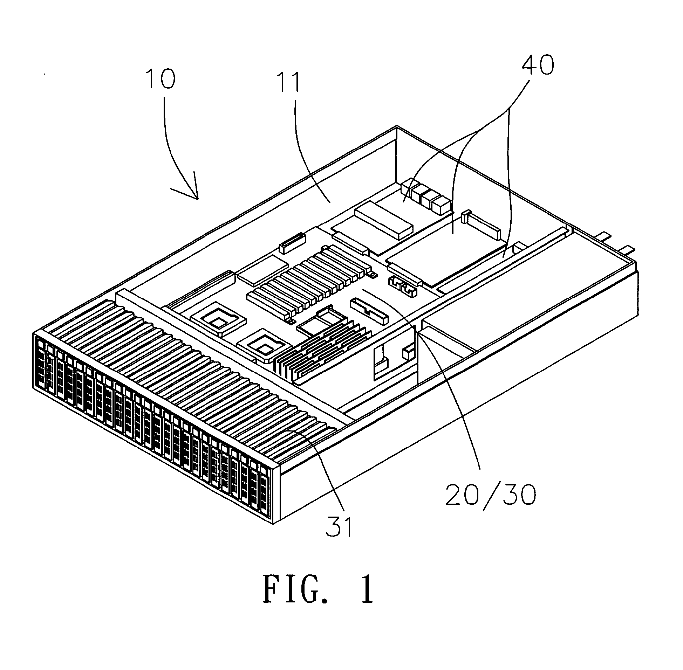

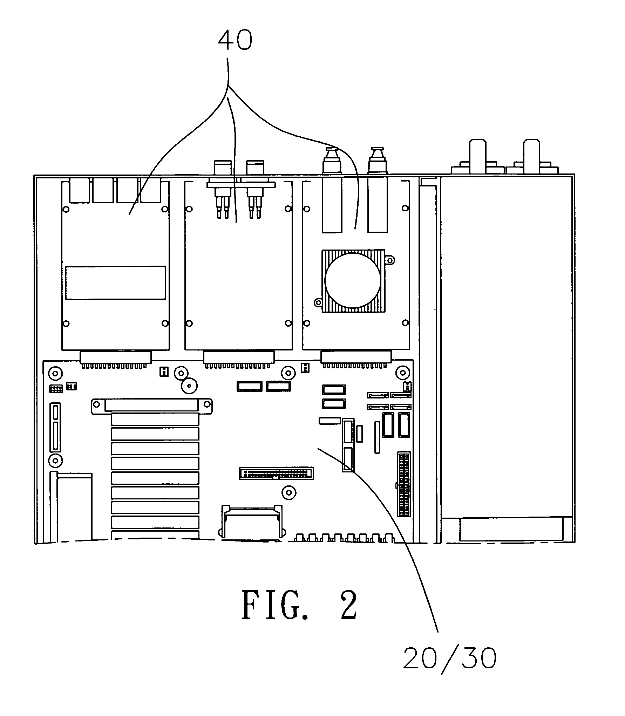

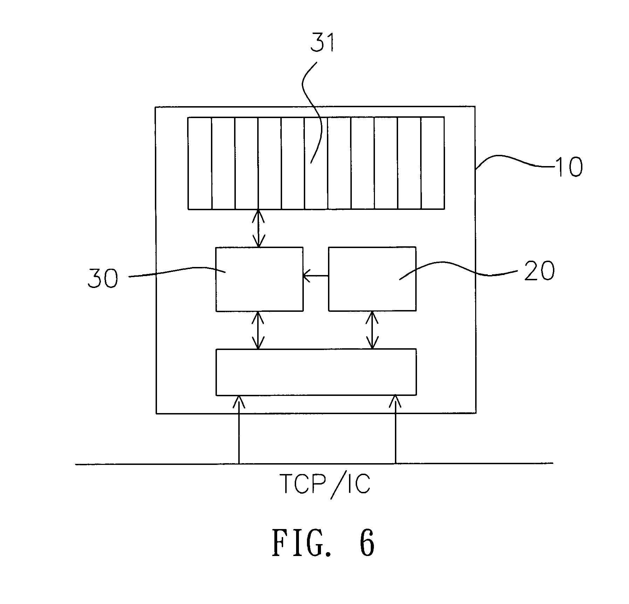

Refer to FIGs. 1-3, and 6 illustrating an integration device used for network computing and security and network storage according to this invention, the device being provided with a computer unit (10), which is an industrial computer case and works with the industrial computer of 2U form factor. A capacity chamber (11) is provided in the computer unit (10), and a panel (12) is provided on at least one side. Further, the computer unit (10) may be placed on an industrial computer cabinet, not shown. The computer unit (10) comprises a network computing and security module (20), a network access control module (30), and a mainboard I/O module (40).

The network computing and security module (20) is provided for computing and processing of the computer application and security program. In this embodiment, it serves as a type of mainboard contained in the capacity chamber (11).

The network access control module (30) is provided for data access and control. In this embodiment, it may be also a type of mainboard. The data storage structure of the network access control module (30) is a Network Attached Storage (NAS) structure and is separately connected electrically to the network computing and security module (20) and a data storage device (31). Further, the network access control module (30) and the data storage device (31) are contained in the capacity chamber (11). In this embodiment, the data storage device (31) is a DISK RAID system composed of 2.5" extractable hard disks. The means of electrical connection between the network access control module (30) and the data storage device (31) is Serial Advanced Technology Attachment (SATA).

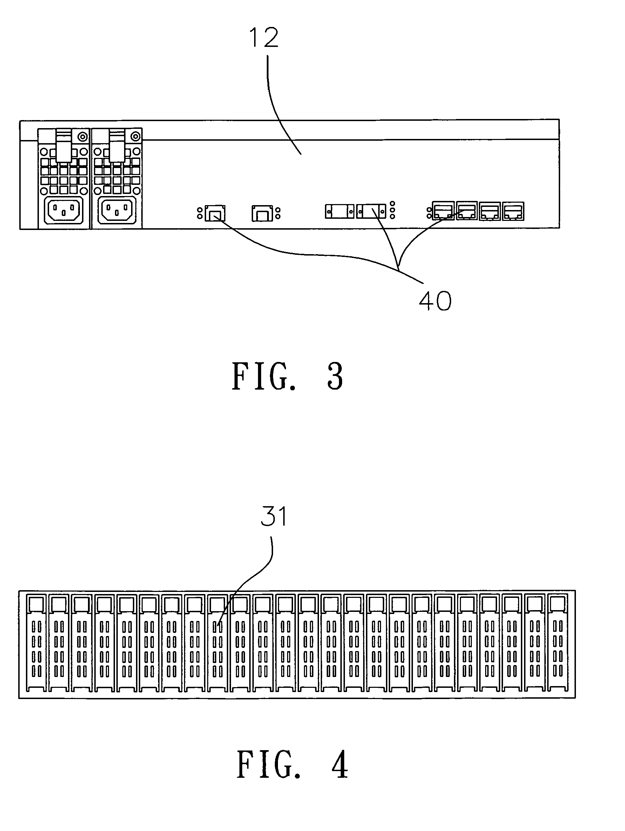

Refer further to FIGs. 3, 4, and 6. The mainboard I/O module (40) being a single-board common module, which is separately connected electrically to the network computing and security module (20) and the network access control module (30). Further, the mainboard I/O module (40) allows a means of high 10G speed connection and allows network connection to foreign ports. The foreign-port network may be a TCP/IP network structure and the means of connection of 10G transmission speed includes a RJ-45 connection or an fiber-optic connection. In this embodiment, the RJ-45 or fiber-optic connector is provided on the panel (12).

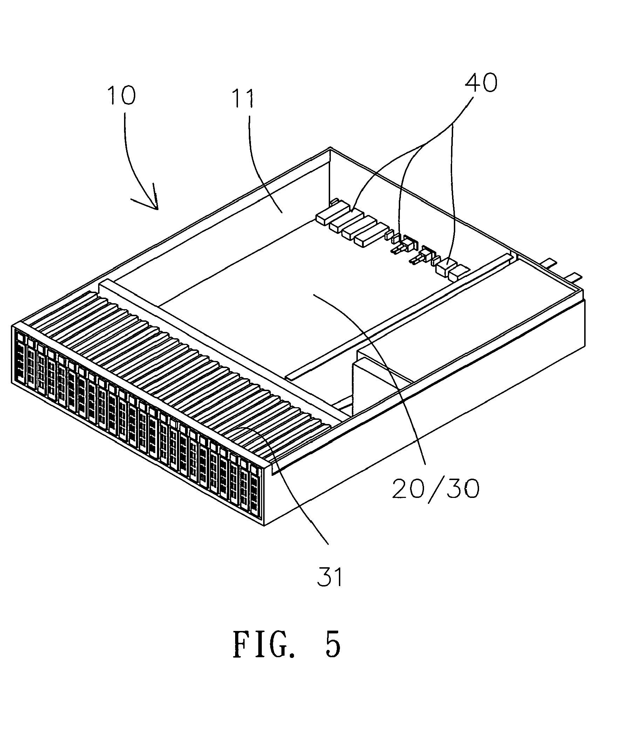

Again, refer to FIG. 5. The network computing and security module (20), the network access control module (30), and the mainboard I/O module (40) may be also integrated into a single mainboard.

The integration device used for network computing and security and network storage according to this invention has at least the following advantages in the aspect of application.
1. The data storage device (31) is a DISK RAID composed of 2.5"extractable hard disks; maximum amounts of hard disks may be placed in a 2U limited space for saving the space of a cabinet.
2. The single-board I/O common module is provided a high-speed mainboard I/O common module for customers to do flexibly optional 10G high-speed connection, for example, by means of the RJ-45 or fiber-optic connection.
3. The single-board used as the optional I/O board is simplified for reducing the cost.
4. As the advantages of the structure mentioned above, 10G high speed transmission and multi-HDD storage space are combined and data security is offered.
5. The single-board common module may reduce the possibility of repeated design caused by customers' various options, so only the expected 10G mainboard I/O module may meet the requests of customers.

While the invention has been described in terms of what is presently considered to be the most practical and preferred embodiments, it is to be understood that the invention needs not be limited to the disclosed embodiment. On the contrary, it is intended to cover various modifications and similar arrangements included within the spirit and scope of the appended claims which are to be accorded with the broadest interpretation so as to encompass all such modifications and similar structures.

## Claims

1. An integration device for network computing and security and network storage, comprising:
a computer unit (10), being provided with a capacity chamber (11) and at least one panel (12); a network computing and security module(20), being provided in the capacity chamber (11) for computing and processing of the computer application and security program; a network access control module (30), being provided in the capacity chamber (11) for data access and control and being separately connected electrically to the network computing and security module (20) and a data storage device(31), the data storage structure of the network access control module (30) being a Network Attached Storage (NAS) structure; and a mainboard I/O module (40), being provided in the capacity chamber (11) and being a single-board common module, which is separately connected electrically to the network computing and security module (20) and the network access control module (30),
the mainboard I/O module (40) allowing a means of high 10G transmission speed connection and allowing network connection to foreign ports.

2. The integration device for network computing and security and network storage according to claim 1, **characterized in that** the computer unit (10) is an industrial computer case and is contained in an industrial computer cabinet.

3. The integration device for network computing and security and network storage according to claim 1, **characterized in that** the computer unit (10) works with the industrial computer of 2U form factor.

4. The integration device for network computing and security and network storage according to claim 1, **characterized in that** the network computing and security module (20) is a type of mainboard.

5. The integration device for network computing and security and network storage according to claim 1, **characterized in that** the network access control module (30) is a type of mainboard.

6. The integration device for network computing and security and network storage according to claim 1, **characterized in that** the mainboard I/O module (40) is a type of mainboard.

7. The integration device for network computing and security and network storage according to claim 1, **characterized in that** the network computing and security module (20), the network access control module (30), and the mainboard I/O module (40) are integrated into a single mainboard.

8. The integration device for network computing and security and network storage according to claim 1, **characterized in that** the mainboard I/O module (40) allows a RJ-45 or fiber-optic connection.

9. The integration device for network computing and security and network storage according to claim 8, **characterized in that** the RJ-45 or fiber-optic connector is provided on the panel (12) of the computer unit (10).

10. The integration device for network computing and security and network storage according to claim 1, **characterized in that** the foreign-port network is a TCP/IP network structure.
